# EUROPEAN PATENT APPLICATION

(11) **EP 2 620 851 A1**
(43) Date of publication of application: **31.07.2013**
(21) Application number: 11826677.4
(22) Date of filing: 25.08.2011
(51) Int. Cl.: G06F 3/048, G06F 3/033, H04M 1/725

(54) **PORTABLE TERMINAL AND OPERATION CONTROL METHOD**

(30) Priority: 24.09.2010 JP 2010213927
(71) Applicant: NEC Corporation, Tokyo 108-8001 (JP)
(72) Inventor: MIYAHARA, Masaki, Tokyo 108-8001 (JP)
(74) Representative: Vossius & Partner
(86) International application number: PCT/JP2011/069167
(87) International publication number: WO 2012/039231

(57) **Abstract**

There is provided a mobile terminal making it possible to normally use applications developed for other mobile terminals performing different screen display mode switching control. In application section 15, an operation/orientation relationship, which is a correspondence relationship between the operation of application section 15 itself and the orientation of mobile terminal 1, is predetermined according to the display mode. Control section 14 displays a screen on display 11 in a display mode corresponding to the detection result of orientation sensor 13 that detects the orientation of mobile terminal 1. Conversion section 16 converts the detection result of orientation sensor 13 in accordance with conversion rules determined according to an operation/orientation relationship and inputs it to application section 15 as orientation information. Application section 15 operates in accordance with the inputted orientation information and the operation/orientation relationship.

## Description

### Technical Field

The present invention relates to a mobile terminal that displays a screen in a display mode corresponding to the orientation thereof and an operation control method.

### Background Art

Some mobile terminals, such as mobile phones and PDAs (Personal Digital Assistants), switch the display mode of a screen displayed on a display according to its own orientation (see Patent Literature 1).

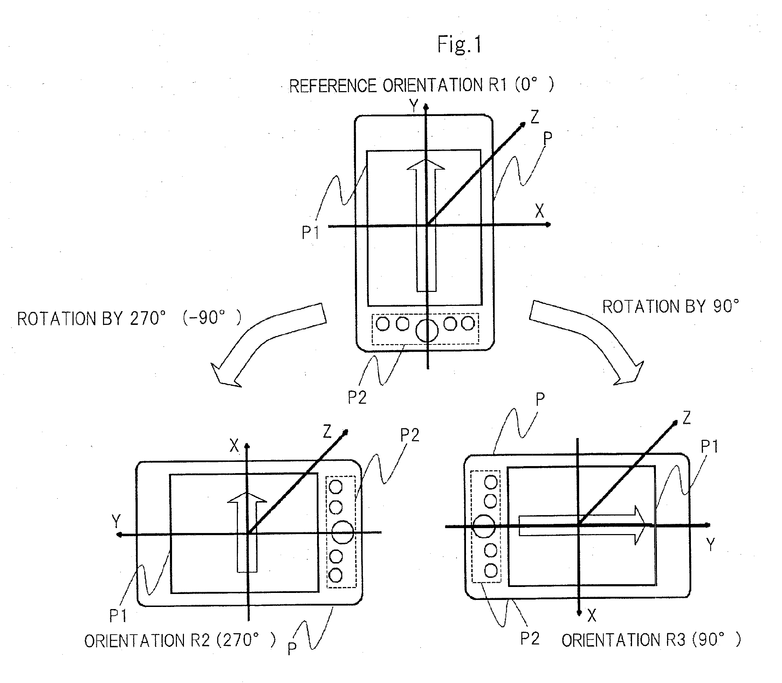

For example, as for mobile terminal P as shown in Figure 1, a portrait mode in which the screen is displayed to be vertically long is applied in reference orientation R1 in which display P1 is arranged to be vertically long, and a landscape mode in which the screen is displayed to be laterally long is applied in orientation R2 obtained by mobile terminal P that is rotated by 270° from reference orientation R1 with the normal line of display P1 as an axis. In orientation R3 obtained by mobile terminal P that is rotated by 90° from reference orientation R1 with the normal line of display P1 as an axis, the landscape mode is not applied but the portrait mode is applied. This is for the purpose of causing operation section P2 to be operated by a right hand which is likely to be a person's dominant hand, by causing operation section P2 to be necessarily arranged on the right side of display P1 during the landscape mode.

As for some application programs (hereinafter abbreviated as applications) installed in a mobile terminal, the operation is controlled according to the orientation of the mobile terminal. For example, in the case where the orientation of a mobile terminal is detected with the use of a 3-axis acceleration sensor, the operation of the applications is controlled according to values of the 3-axis acceleration sensor (accelerations) corresponding to the X, Y and Z axes, respectively.

When the above-described applications are applied to a display-mode switchable mobile terminal, it may happen that a normal operation is not performed because the relationships between the direction of the screen and the X, Y and Z axes change when the display mode is switched.

For example, as shown in Figure 1, when the display mode is the portrait mode, the left and right direction of the screen is the X axis, and the up and down direction of the screen is the Y axis. When the display mode is the landscape mode, however, the left and right direction of the screen is the Y axis, and the up and down direction of the screen is the X axis. Therefore, when the display mode is switched, it may happen that the applications misjudge the X and Y axes and cannot operate normally.

Therefore, in applications developed for display-mode switchable mobile terminals, relationships between the direction of the screen and the X, Y and Z axes are defined for each display mode.

### Citation List

### Patent Literature

Patent Literature 1: JP2009-75946A

### Summary of Invention

### Technical Problem

Recently, attention has been focused on a mobile terminal provided with a touch panel type display in which a display and a touch panel are integrated. In such a mobile terminal, the convenience is enhanced by making it possible to operate the touch panel with the right hand and to operate an operation section with the left hand.

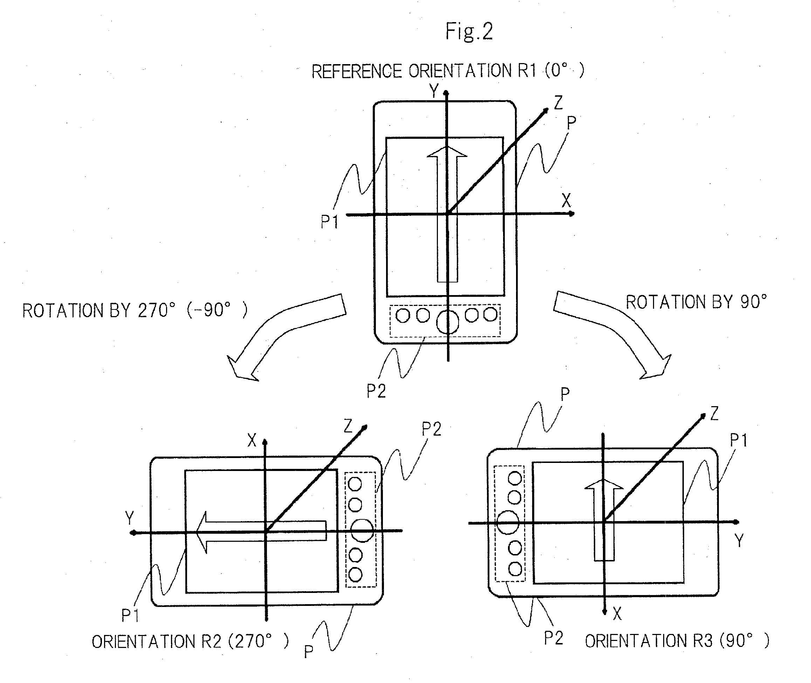

Therefore, in the mobile terminal provided with the touch panel type display, it is desirable that, as shown in Figure 2, the landscape mode is applied in orientation R3 obtained by mobile terminal that is rotated by 90° from reference orientation R1, and the portrait mode is applied in orientations other than orientation R3.

When the setting is changed as described above, however, the directions of the X and Y axes in the landscape mode become opposite to what they were before the change in the setting. Therefore, in the above-described applications, the relationship between the direction of the screen and the directions of the X and Y axes changes, and it may happen that the applications cannot operate normally.

The object of the present invention is to provide a mobile terminal making it possible to normally use applications developed for other mobile terminals performing different screen display mode switching control, and an operation control method.

### Solution to Problem

A mobile terminal according to the present invention is a mobile terminal provided with a display, comprising an orientation sensor that detects the orientation of the mobile terminal; a control section that displays a screen on said display in a display mode corresponding to a detection result of said orientation sensor; an application section in which a correspondence relationship between the operation of said application section itself and orientation information showing the orientation of the mobile terminal is predetermined according to the display mode, and, when the orientation information is inputted, operates in accordance with the orientation information and the correspondence relationship; and a conversion section that converts the detection result in accordance with conversion rules corresponding to the display mode and the correspondence relationship and inputs the detection result to said application section as the orientation information.

An operation control method according to the present invention is an operation control method by a mobile terminal comprising a display and an application section in which a correspondence relationship between the operation of the application section itself and orientation information showing the orientation of the mobile terminal is predetermined in the application section according to the display mode of a screen displayed on the display, and which, when the orientation information is inputted, operates in accordance with the orientation information and the correspondence relationship, wherein the orientation of the mobile terminal is detected, and a screen is displayed on the display in a display mode corresponding to a result of the detection; and the detection result is converted in accordance with conversion rules corresponding to the display mode and the correspondence relationship and inputted to the application section as the orientation information.

### Effect of Invention

According to the present invention, it becomes possible to normally use applications developed for other mobile terminals performing different screen display mode switching control.

### Brief Description of Drawings

[Figure 1] Figure 1 is a diagram for illustrating an operation of a related-art mobile terminal.
[Figure 2] Figure 2 is a diagram for illustrating a problem of the related-art mobile terminal.
[Figure 3] Figure 3 is a front view showing the outline of a mobile terminal of a first exemplary embodiment.
[Figure 4] Figure 4 is a block diagram showing a functional configuration of the mobile terminal of the first exemplary embodiment.
[Figure 5] Figure 5 is a block diagram showing a configuration example of an orientation sensor.
[Figure 6] Figure 6 is a block diagram showing an example of the orientation of the mobile terminal of the first exemplary embodiment.
[Figure 7] Figure 7 is a block diagram showing another example of the orientation of the mobile terminal of the first exemplary embodiment.
[Figure 8] Figure 8 is a flowchart for illustrating an operation of the mobile terminal of the first exemplary embodiment.

### Description of Embodiments

An exemplary embodiment will be described below with reference to drawings. In the description below, those having the same function are given the same reference numeral, and description thereof may be omitted.

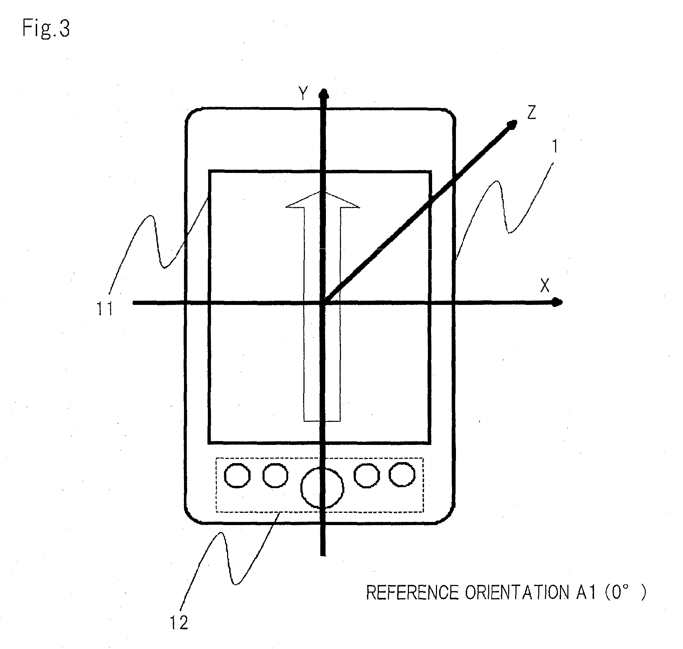

Figure 3 is a front view showing the outline of a mobile terminal of a first exemplary embodiment. As shown in Figure 3, display 11 and operation section 12 are arranged side by side on mobile terminal 1. An arrow in display 11 indicates the direction of a screen.

Display 11 may be a touch panel type display which is integrated with a touch panel. In this exemplary embodiment, the display surface of the display is assumed to be in a rectangular shape. Here, in Figure 3, the display surface of display 11 is assumed to be an XY plane, and an axis perpendicular to the display surface is assumed to be a Z axis. On the XY plane, the shorter direction of the display surface is assumed to be an X direction, and the longer direction of the display surface is assumed to be a Y direction. The orientation of mobile terminal 1 in Figure 3 is reference orientation A1 in which operation section 12 is arranged below the display.

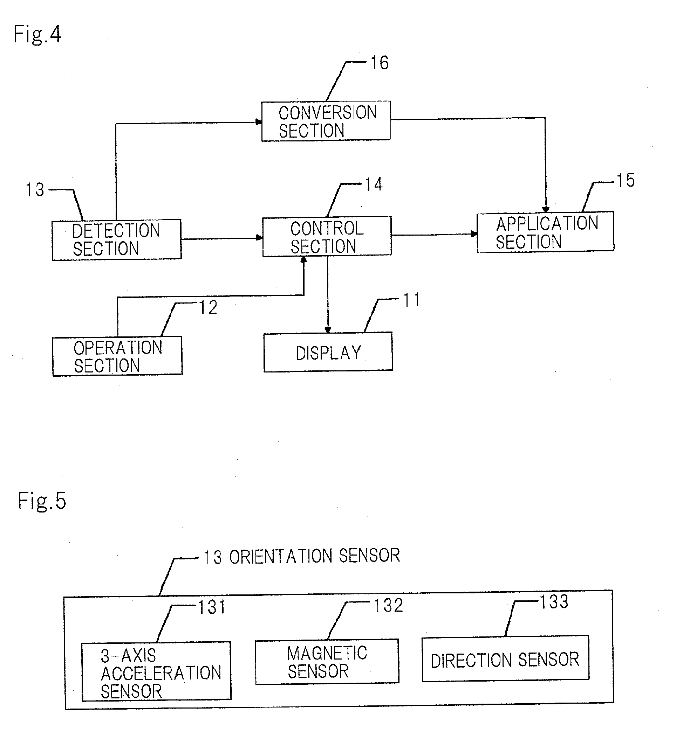

Figure 4 is a block diagram showing a functional configuration of mobile terminal 1. In Figure 4, mobile terminal 1 is provided with display 11, operation section 12, orientation sensor 13, control section 14, application section 15 and conversion section 16.

Orientation sensor 13 detects the orientation of mobile terminal 1 and notifies control section 14 and conversion section 16 of the result of detection.

More specifically, orientation sensor 13 is provided with 3-axis acceleration sensor 131, magnetic sensor 132 and direction sensor 133 and notifies the detection result of each of sensors 131 to 133 as the detection result of its own (of orientation sensor 13). The configuration of orientation sensor 13 is not limited to the above configuration and may be appropriately changed. For example, orientation sensor 13 may be such that it is provided with at least one of 3-axis acceleration sensor 131, magnetic sensor 132 and direction sensor 133.

Control section 14 is realized, for example, by an OS (Operating System) of mobile terminal 1 and the like. Control section 14 decides the display mode of the screen to be displayed on display 11 according to the detection result notified from orientation sensor 13 and notifies application section 15 of the decided displayed mode.

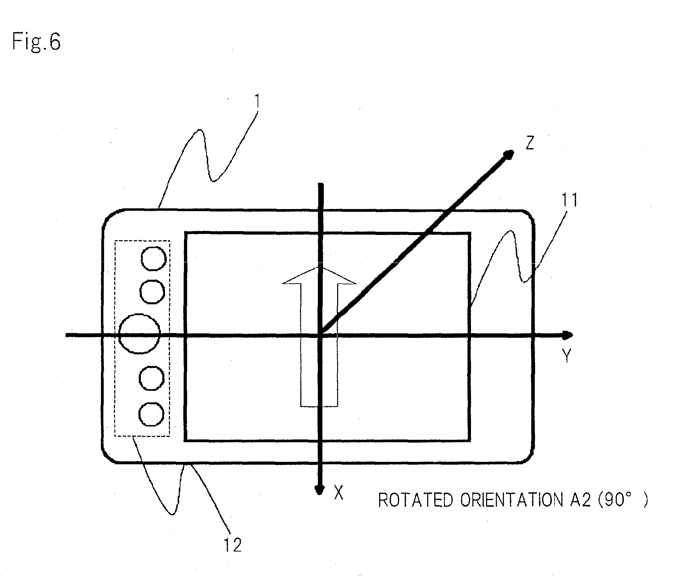

In the description below, if the detection result shows rotated orientation A2 obtained by mobile terminal 1 that is rotated by 90° from reference orientation A1 shown in Figure 3 with the Z axis as the center as shown in Figure 6, control section 14 decides the display mode that is to be the landscape mode, a first display mode in which a screen is displayed to be laterally long, and, if the detection result shows any other orientation, decides the display mode that is to be the portrait mode, a second display mode in which a screen is displayed to be vertically long. By deciding the display mode as described above, a screen is displayed in the landscape mode when operation section 12 is arranged on the left side of the display, and, therefore, the operability can be improved when display 101 is a touch panel type display. Rotated orientation A2 is an example of a first orientation.

The display modes described above are set on the assumption that the display is arranged to be vertically long when mobile terminal 1 is in reference orientation A1. Apart from this, in the case of such a mobile terminal that the display is arranged to be laterally long when mobile terminal 1 is in reference orientation A1, control section 14 decides the display mode that is to be the portrait mode if the detection result shows rotated orientation A2 and decides the display mode to the landscape mode if the detection result shows an orientation other than rotated orientation A2. Thus, the correspondence relationship between a detection result and a display mode can be appropriately changed according to the shape or the use form of mobile terminal 1.

When accepting screen information corresponding to a display mode notified to application section 15, from application section 15, control section 14 displays a screen shown by the screen information on display 11. Thereby, control section 14 displays a screen in a display mode corresponding to the detection result of orientation sensor 13, on the display.

Application section 15 is realized by an application installed in mobile terminal 1.

When notified of a display mode from control section 14, application section 15 generates screen informations showing a screen corresponding to the display mode and outputs the screen information to control section 14. For example, application section 15 generates screen information showing a vertically long screen if the display mode is the portrait mode and generates screen information showing a laterally long screen if the display mode is the landscape mode.

Furthermore, in application section 15, an operation/orientation relationship, which is a correspondence relationship between the operation of application section 15 itself and the orientation of mobile terminal 1, is predetermined for each display mode. When orientation information is inputted from conversion section 16, application section 15 operates in accordance with the orientation information and the operation/orientation relationship.

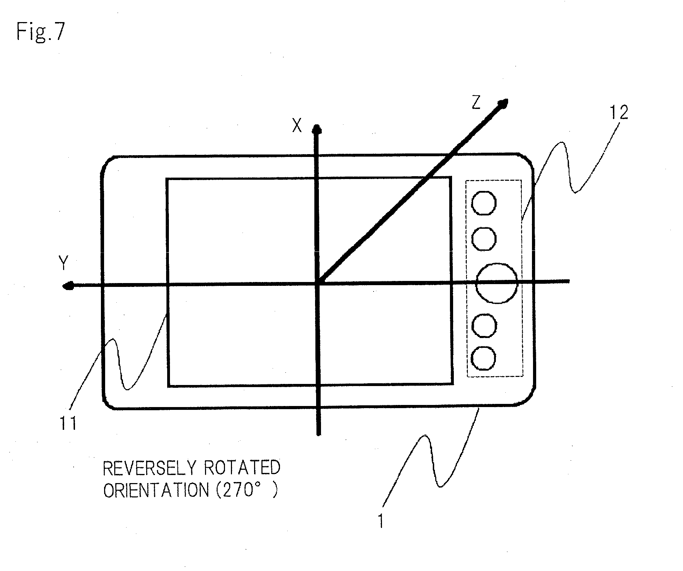

Here, the operation/orientation relationship is determined on the assumption that the orientation of mobile terminal causing the display mode to be the landscape mode is in a direction opposite to the direction of actual mobile terminal 1. That is, the operation/orientation relationship is determined on the assumption that the display mode becomes the landscape mode if mobile terminal 1 is in reversely rotated orientation A3 obtained by mobile terminal 1 having rotated by 270° from reference orientation A1 with the Z axis as the center as shown in Figure 7, and the display mode becomes the portrait mode if mobile terminal 1 is in an orientation other than reversely rotated orientation A3. Therefore, application section 15 operates according to the values of the X, Y and Z directions in orientation information, as shown in Figure 3, and operates according to the values of the X, Y and Z directions in orientation information, as shown in Figure 7. Reversely rotated orientation A3 is a second orientation obtained by mobile terminal 1 having rotated by 180° from rotated orientation A2 with the Z axis as a rotation axis.

When the display mode actually becomes the landscape mode, the detection result of orientation sensor 13 shows values corresponding to the X, Y and Z directions shown in Figure 6. Therefore, if the detection result is used as orientation information as it is, application section 15 judges the values of the X and Y directions in the orientation information as values corresponding to actual values reversed.

Therefore, conversion section 16 converts the detection result notified from orientation sensor 13 in accordance with conversion rules determined according to display modes and operation/orientation relationships and inputs the converted detection result to application section 15 as orientation information.

More specifically, if the display mode is the portrait mode, conversion section 16 inputs a detection result to application section 15 as orientation information as it is. This is because, if the display mode is the portrait mode, application section 15 operates normally even if the detection result is not converted.

On the other hand, if the display mode is the landscape mode, conversion section 16 converts each of detection results of 3-axis acceleration sensor 131, magnetic sensor 132 and direction sensor 133 as follows and inputs it to application section 15.

As for the detection result of 3-axis acceleration sensor 131 and magnetic sensor 132, conversion section 16 reverses each of the values of the X and Y directions. As for the detection result of direction sensor 133, conversion section 16 subtracts 180° from a yaw angle if the yaw angle is equal to or larger than 180°, and adds 180° to the yaw angle if the yaw angle is smaller than 180°. Then, conversion section 16 reverses each pitch angle and each roll angle.

Here, the pitch angle is a rotation angle of mobile terminal I with the X axis as a rotation axis; the roll angle is a rotation angle of mobile terminal 1 with the Y axis as a rotation axis; and the yaw angle is a rotation angle of mobile terminal 1 with the Z axis as a rotation axis.

When the conversion as described above is performed, the values of orientation information become the same as those of the actual orientation, and a normal operation is performed.

Next, an operation of mobile terminal 1 will be described.

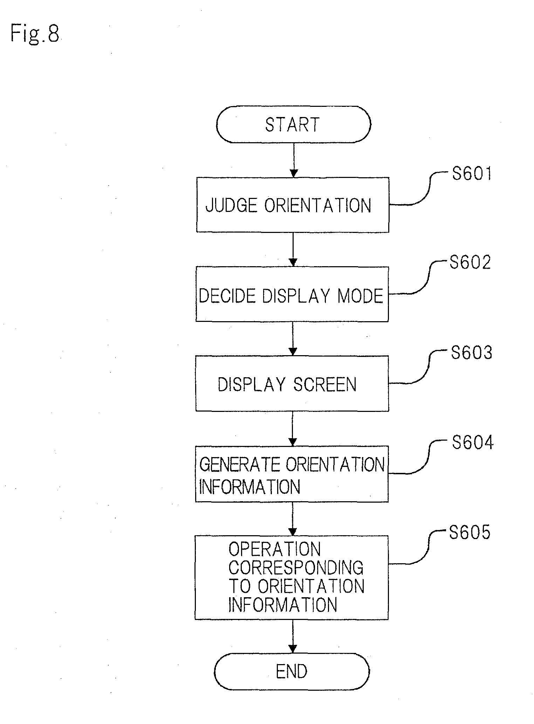

Figure 8 is a flowchart for illustrating the operation of mobile terminal 1.

First, when an application is activated and application section 15 is realized, control section 14 confirms the detection result notified from orientation sensor 13 and judges whether the orientation of mobile terminal 1 is rotated orientation A2 or not (step S601).

Then, control section 14 decides the display mode that is to be the landscape mode if the orientation of mobile terminal 1 is rotated orientation A2, and decides the display mode that is to be the portrait mode if the orientation of mobile terminal 1 is an orientation other than rotated orientation A2 (step S602).

Next, control section 14 notifies application section 15 of the decided display mode. Application section 15 generates image information showing a screen corresponding to the notified display mode and outputs the image information to control section 14. When accepting the image information, control section 14 displays a screen shown by the image information, on display 11 (step S603).

After that, application section 15 notifies conversion section 16 of a request for acquiring orientation information about mobile terminal 1. When notified of the acquisition request, conversion section 16 converts the detection result notified from orientation sensor 13 according to conversion rules and generates the converted detection result as orientation information (step S604). Since the conversion rules are rules different for each display mode, conversion section 16 is required to determine the current display mode. Here, conversion section 16 may determine the display mode from the detection result or may be notified of the display mode from control section 14.

When having generated the orientation information, conversion section 16 inputs the orientation information to application section 15. When the orientation information is inputted, application section 15 performs an operation corresponding to the orientation information (step S605).

As described above, according to this exemplary embodiment, an operation/orientation relationship, which is a correspondence relationship between the operation of application section 15 itself and the orientation of mobile terminal 1, is predetermined in application section 15 according to display modes. Control section 14 displays a screen on display 11 in a display mode corresponding to a detection result of orientation sensor 13 that detects the orientation of mobile terminal 1. Conversion section 16 converts the detection result of orientation sensor 13 in accordance with conversion rules corresponding to the display mode and an operation/orientation relationship and inputs it to application section 15 as orientation information. Application section 15 operates in accordance with the inputted orientation information and the operation/orientation relationship.

Therefore, since the detection result of orientation sensor 13 is converted in accordance with the conversion rules corresponding to the display mode and the operation/orientation relationship and inputted to application section 15, it is possible to normally use applications developed for mobile terminals performing different screen display mode switching control.

Next, a second exemplary embodiment will be described.

In mobile terminal 1 of this exemplary embodiment, applications with different operation/orientation relationships can be installed.

Specifically, in addition to a first application in which an operation/orientation relationship as described in the first exemplary embodiment is determined, the applications include a second application in which an operation/orientation relationship is determined on the assumption that the orientation of a mobile terminal that causes the display mode to be the landscape mode is the same as that of actual mobile terminal 1.

More specifically, the operation/orientation relationship of the second application is determined on the assumption that the display mode becomes the landscape mode if mobile terminal 1 is in reversely rotated orientation A3 obtained by mobile terminal 1 that is rotated by 90° from reference orientation A1 with the Z axis as the center, and the display mode becomes the portrait mode if mobile terminal 1 is in an orientation other than reversely rotated orientation A3. Therefore, application section 15 realized by the second application operates according to the values of the X, Y and Z directions in orientation information, as shown in Figure 3, and operates according to the values of the X, Y and Z directions in orientation information, as shown in Figure 6.

Therefore, when the display mode is the landscape mode, application section 15 realized by the second application operates normally if the detection result of orientation sensor 13 is used as orientation information as it is, and does not operate normally if the detection results is converted as done in the first exemplary embodiment.

Therefore, in this exemplary embodiment, application section 15 notifies conversion section 16 of relationship information showing the operation/orientation relationship of its own. Conversion section 16 converts the detection result of orientation sensor 13 according to the notified relationship information.

For example, application section 15 notifies conversion section 16 of information showing the first application or the second application as relationship information together with an orientation information acquisition request.

If the notified relationship information shows the first application, conversion section 16 converts the detection result as described in the first exemplary embodiment and inputs the converted detection result to application section 15 as orientation information.

On the other hand, if the notified relationship information shows the second application, conversion section 16 inputs the detection result to application section 15 as orientation information as it is, irrespective of the display mode.

As for applications developed for other mobile terminals performing different screen display mode switching control, since they are not set such that they notify conversion section 16 of relationship information, conversion section 16 may convert the detection result as described in the first exemplary embodiment if relationship information is not notified.

As described above, according to this exemplary embodiment, it becomes possible to cause both of the first application developed for other mobile terminals performing different screen display mode switching control and of an application originally developed for mobile terminal 1 to operate normally.

The invention as claimed in the application concerned has been described with reference to the exemplary embodiments. However, the invention as claimed in the application concerned is not limited to the above exemplary embodiments. It is possible to make various modifications which can be understood by one skilled in the art in the configuration or details of the invention as claimed in the application concerned, within the scope of the invention as claimed in the application concerned.

For example, though display 11 of mobile terminal 1 shows only one screen in each of the exemplary embodiments, the form of two screens being arranged side by side, such as being used in a state of a spread (like a state of reading a book) may be actually adopted.

In this case, control section 14 may set the display mode to the portrait mode when vertically long screens are arranged in a lateral direction, and to the landscape mode when laterally long screens are arranged in a vertical direction. However, control section 14 may set the display mode to the portrait mode when laterally long screens are arranged in the vertical direction, and to the landscape mode when vertically long screens are arranged in the lateral direction.

This application claims priority based on Japanese Patent Application No. 2010-213927 filed on September 24, 2010, the disclosure of which is hereby incorporated by reference thereto in its entirety.

## Claims

1. A mobile terminal provided with a display, comprising:
an orientation sensor that detects the orientation of the mobile terminal;
a control section that displays a screen on said display in a display mode corresponding to a detection result of said orientation sensor;
an application section in which a correspondence relationship between the operation of said application section itself and orientation information showing the orientation of the mobile terminal is predetermined according to the display mode, and, when the orientation information is inputted, operates in accordance with the orientation information and the correspondence relationship; and
a conversion section that converts the detection result in accordance with conversion rules corresponding to the display mode and the correspondence relationship and inputs the detection result to said application section as the orientation information.

2. The mobile terminal according to claim 1, wherein
said control section displays the screen in a first display mode if the detection result shows a first orientation, and displays the screen in a second display mode if the detection result shows an orientation other than the first orientation; and
the correspondence relationship is determined on the premise that, when the mobile terminal is in a second orientation obtained by rotating the mobile terminal by 180° from the first orientation with the normal line of said display as an axis, the first display mode is set, and, when the mobile terminal is in an orientation other than the second orientation, the second display mode is set.

3. The mobile terminal according to claim 2, wherein
said orientation sensor comprises a 3-axis acceleration sensor; and
the conversion rules include a rule of, when the display mode is the first display mode, reversing each of the values of two mutually perpendicular directions included in the display surface of said display, in a detection result of said 3-axis acceleration sensor.

4. The mobile terminal according to claim 2 or 3, wherein
said orientation sensor comprises a magnetic sensor; and
the conversion rules include a rule of, when the display mode is the first display mode, reversing each of the values of two mutually perpendicular directions included in the display surface of said display, in a detection result of said magnetic sensor.

5. The mobile terminal according to any one of claims 2 to 4, wherein
said orientation sensor comprises a direction sensor; and
the conversion rules include a rule of, when the display mode is the first display mode, subtracting 180° from a yaw angle if the yaw angle is equal to or larger than 180°, adding 180° to the yaw angle if the yaw angle is smaller than 180°, and reversing the pitch angle and the roll angle, in a detection result of said direction sensor.

6. The mobile terminal according to any one of claims 2 to 5, wherein
the first display mode is a landscape mode of displaying the screen to be laterally long, and the second display mode is a portrait mode of displaying the screen to be vertically long.

7. The mobile terminal according to any one of claims 1 to 6, wherein
said application section notifies said conversion section of relationship information showing the correspondence relationship; and
when notified of the relationship information, said conversion section converts the detection result in accordance with conversion rules corresponding to a correspondence relationship shown by the relationship information.

8. The mobile terminal according to any one of claims 1 to 7, further comprising an operation section arranged side by side with said display; wherein
the first orientation is an orientation in which said operation section is arranged on the left side of said display.

9. An operation control method by a mobile terminal comprising a display and an application section in which a correspondence relationship between the operation of the application section itself and orientation information showing the orientation of the mobile terminal is predetermined in the application section according to the display mode of a screen displayed on the display, and which, when the orientation information is inputted, operates in accordance with the orientation information and the correspondence relationship, wherein
the orientation of the mobile terminal is detected, and a screen is displayed on the display in a display mode corresponding to a result of the detection; and
the detection result is converted in accordance with conversion rules corresponding to the display mode and the correspondence relationship and inputted to the application section as the orientation information.
